Europäisches Patentamt

European Patent Office

Office européen des brevets

(19)

(11) Numéro de publication: **0 004 805**
**B1**

(12) **FASCICULE DE BREVET EUROPEEN**

(45) Date de publication du fascicule de brevet: **25.11.81**

(51) Int. Cl.³: **F 24 J 3/02**

(21) Numéro de dépôt: **79400174.3**

(22) Date de dépôt: **16.03.79**

(54) **Capteur d'énergie solaire comportant un élément absorbant sélectivement l'énergie rayonnée.**

(30) Priorité: **04.04.78 FR 7809873**

(43) Date de publication de la demande:
**17.10.79 Bulletin 79/21**

(45) Mention de la délivrance du brevet:
**25.11.81 Bulletin 81/47**

(84) Etats Contractants Désignés:
**DE GB IT NL**

(56) Documents cités:
**DE - A - 2 330 722**
**DE - A - 2 502 594**
**FR - A - 1 142 777**
**FR - A - 2 296 826**
**FR - A - 2 337 320**
**FR - A - 2 340 516**
**FR - A - 2 345 675**
**FR - A - 2 349 802**
**FR - A - 2 349 806**
**FR - A - 2 352 262**
**FR - A - 2 360 051**
**FR - A - 2 404 182**
**US - A - 4 026 272**
**US - A - 4 059 093**

(73) Titulaire: **COMPAGNIE DES LAMPES**
**29, rue de Lisbonne**
**F-75008 Paris (FR)**

(72) Inventeur: **Mourier, Jean**
**"THOMSON-CSF" - SCPI 173, bld Haussmann**
**F-75360 Paris Cedex 08 (FR)**
Inventeur: **Scoarnec, Louis**
**"THOMSON-CSF" - SCPI 173, bld Haussmann**
**F-75360 Paris Cedex 08 (FR)**

(74) Mandataire: **Dubreuil, Annie et al,**
**"THOMSON-CSF" - SCPI 173, bld Haussmann**
**F-75360 Paris Cedex 08 (FR)**

Courier Press, Leamington Spa, England.

## Capteur d'énergie solaire comportant un élément absorbant sélectivement l'énergie rayonnée.

La présente invention se rapporte au domaine des capteurs d'énergie solaire.

Elle a pour objet un capteur comportant un élément qui absorbe sélectivement l'énergie rayonnée, c'est-à-dire plus précisément, qui est doué d'un coefficient d'absorption élevé dans la gamme de longueur d'onde correspondant à la lumière solaire, et d'un coefficient d'émission faible dans la gamme de longueur d'onde correspondant à l'infrarouge.

On connaît des capteurs d'énergie solaire de type tubulaire, constitués par un tube cylindrique dans lequel circule un fluide caloporteur. Le tube est en verre ou en métal et il est recouvert d'une couche absorbant le rayonnement solaire. Le tube est entouré d'une enveloppe transparente permettant de la placer sous vide, afin d'améliorer son isolation thermique.

Un tel capteur est décrit dans le brevet français 2.296.826 qui comporte une couche sélective assurant une bonne absorption des rayons solaires et ayant un pouvoir émissif thermique faible. Cette couche peut être obtenue en faisant adhérer une feuille mince de métal ayant un revêtement en semi-conducteur sur la face supérieure du corps. La face inférieure du corps absorbant porte un réflecteur, par exemple une feuille brillante de métal qui n'est pas nécessairement en bon contact thermique avec le corps en verre. Cela réduit au minimum l'émission thermique à partir de la face inférieure.

Un capteur est également décrit dans le brevet français 2.352.262. Il s'agit d'un vase à double paroi en verre qui entoure une enceinte annulaire vidée d'air, d'un tube intérieur et d'un tube extérieur. Du côté du vide le tube intérieur est recouvert sur la moitié de sa périphérie cylindrique d'une couche absorbant la lumière solaire sélective tandis que du côté du vide, sur le demi-cylindre inférieur est appliquée une couche réflective métallique.

De telles structures sont technologiquement difficiles à mettre en oeuvre et donc d'un coût relativement élevé. Il est d'autre part connu par le document DE—A—2.330.722 de traiter un panneau solaire pour qu'il réfléchisse bien dans la zone de rayonnement infrarouge mais il s'agit là d'une application différente de celle des capteurs concernés par la présente invention.

La présente invention a pour objet un capteur d'énergie solaire permettant une réduction de son coût de fabrication.

A cet effet, le capteur d'énergie solaire selon l'invention comporte un tube capteur dans lequel circule un fluide caloporteur, placé dans une enceinte transparente à vide, et un support métallique de forme tubulaire en liaison thermique avec ce tube, ayant une conductivité thermique élevée, recouvert du côté de l'enceinte transparente d'une couche d'un matériau absorbant sélectivement l'énergie rayonnée, ceci au moins dans la zone de l'élément soumise au rayonnement direct ou réfléchi, l'autre zone non soumise à ce rayonnement, étant réfléchissante dans l'infrarouge, ce capteur étant caractérisé en ce que cette liaison thermique est réalisée au moyen d'une couche ayant un coefficient d'émission élevée dans l'infrarouge et déposée sur la surface du support métallique faisant face au tube capteur et en contact au moins partiellement avec ce tube capteur.

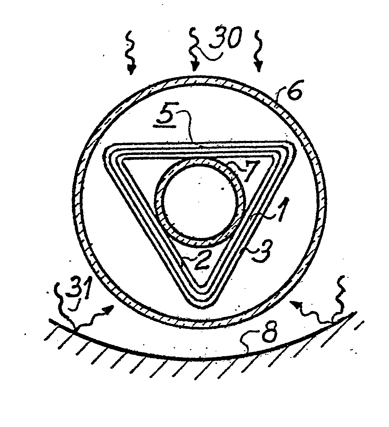

Les caractéristiques de l'invention ressortiront mieux de la description suivante, illustrée par la figure unique annexée, qui représente un capteur d'énergie solaire selon l'invention.

Ce capteur comprend un élément sélectivement absorbant, globalement repéré 5, comportant un support 1, une couche sélectivement absorbante 3 et une couche 2 ayant un coefficient d'émittivité élevé dans l'infrarouge.

Le support 1 est une feuille rigide d'un matériau ayant une conductivité thermique élevée, par exemple un métal tel que l'argent, l'or ou le cuivre, ou encore l'aluminium, le nickel, le fer, le chrome, etc....

La couche 3 reçoit le rayonnement incident 30 et elle est caractérisée par un coefficient d'absorptivité élevé dans le domaine de la lumière solaire et un coefficient d'émittivité faible dans le domaine infrarouge. Elle est obtenue à partir du support 1 par traitement d'une des surfaces de ce dernier: pulvérisation ou traitement chimique ou électrolytique. A titre d'exemple, la couche 3 peut être réalisée de la façon suivante: à partir d'un support 1 en cuivre, on réalise par attaque chimique à chaud une couche 3 d'oxyde de cuivre $Cu_2O$, qui est un semiconducteur de qualité médiocre, dont l'épaisseur est telle qu'elle absorbe les rayonnements solaires mais qu'elle soit transparente aux rayonnements infrarouges.

La couche 2, qui est fortement émissive dans l'infrarouge, est déposée sur la surface 12 du support 1 qui est opposée à la couche 3, afin d'améliorer le rayonnement infrarouge de l'élément. La couche 2 est par exemple consitutée par du noir de fumée, de l'oxyde de titane, ou encore par certaines peintures noires.

Le capteur d'énergie solaire est constitué principalement par: un tube capteur 7, réalisé en un matériau transparent tel que le verre; un élément sélectivement absorbant globalement repéré 5, et une enceinte transparente 6, en verre par exemple, permettant de mettre sous vide l'espace entre l'enceinte et le tube 7 afin d'isoler l'élément 5 et le tube 7 thermiquement de l'extérieur. Le tube 7 peut être ouvert ou fermé à chacune de ses extrémités; il contient un fluide caloporteur qui y circule selon un fonctionnement du type circuit ouvert ou bien circuit fermé (caloduc), cette circulation pouvant être facilitée par un système fonctionnant ou non par capillarité, et non décrite ici.

Un exemple de capteur solaire de ce dernier type est décrit dans la demande de brevet français publiée sous le n° 2 349 802, aux noms de THOMSON—CSF et Cie DES LAMPES, et son certificat d'addition publié sous le n° 2 385 051.

L'ensemble du capteur peut être placé au foyer d'un réflecteur tel un réflecteur extérieur 8, qui renvoie le rayonnement solaire 31 vers le tube 7. L'élément 5 se trouve alors soumis au rayonnement solaire sur toute sa surface extérieure.

L'élément 5 est ici de forme cylindrique par exemple à base triangulaire, placé autour du tube 7, la couche 2 étant du côté du tube 7 et en contact au moins partiellement avec ce tube capteur 7. Dans cette figure l'élément 5 bien que vu en coupe, n'est pas hachuré pour plus de clarté. L'élément 5 est exinscrit au tube 7, l'énergie est transmise à ce dernier notamment par conduction au niveau des points de contact.

## Revendication

Capteur d'énergie solaire, comportant un tube capteur (7) dans lequel circule un fluide caloporteur, placé dans une enceinte transparente (6) à vide, et un support métallique (1) de forme tubulaire en liaison thermique avec ce tube (7), ayant une conductivité thermique élevée, recouvert du côté de l'enceinte transparente (6) d'une couche (3) d'un matériau absorbant sélectivement l'énergie rayonnée, ceci au moins dans la zone de l'élément soumise au rayonnement direct ou réfléchi, l'autre zone non soumise à ce rayonnement, étant réfléchissante dans l'infrarouge; caractérisé en ce que cette liaison thermique est réalisée au moyen d'une couche (2) ayant un coefficient d'émission élevée dans l'infrarouge et déposée sur la surface du support métallique (1) faisant face au tube capteur (7) et en contact au moins partiellement avec ce tube capteur (7).

## Patentanspruch

Sonnenenergiekollektor mit einem Kollektorrohr (7) in dem ein Wärmeübertragungsfluid strömt, wobei das Rohr (7) in einer transparenten evakuierten Kammer (6) angeordnet ist, und mit einem rohrförmigen metallischen Träger (1), der mit diesem Rohr (7) wärmeleitend verbunden ist, eine hohe Wärmeleitfähigkeit aufweist, auf der Seite der transparenten Kammer (6) mit einer Schicht (3) eines die Strahlungsenergie selektiv absorbierenden Materials beschichtet ist, und zwar mindestens in der der direkten oder reflektierten Strahlung ausgesetzten Zone de Elements, während die andere, dieser Strahlung nicht ausgesetzte Zone im Infrarot reflektiert, dadurch gekennzeichnet, daß die wärmeleitende Verbindung hergestellt ist mittels einer Schicht (2) mit einem hohen Emissionskoeffizienten im Infrarot, welche auf der Oberfläche des metallischen Trägers (1) abgeschieden ist, welche dem Kollektorrohr (7) zugewandt ist und mindestens teilweise in Berührung mit diesem Kollektorrohr (7) steht.

## Claim

Collector of solar energy comprising a collector tube (7) in which a heat transfer fluid is circulating, and which is placed in an evacuated transparent chamber (6), and a metallic support (1) of tubular form in thermal connection with said tube (7), having a high thermal conductivity and being covered at the side of the transparent chamber (6) with a layer (3) of a material selectively absorbing the radiated energy, at least in the zone of the element subjected to the direct or reflected radiation, the other zone not subjected to this radiation being reflective in the infrared, characterized in that this thermal connection is realized by means of a layer (2) having a high emission coefficient in the infrared and deposited at the surface of the metallic support (1) which faces the collector tube (7) and is at least partially in contact with said collector tube (7).